# EUROPEAN PATENT APPLICATION

(11) **EP 1 401 090 A1**
(43) Date of publication of application: **24.03.2004**
(21) Application number: 02256491.8
(22) Date of filing: 19.09.2002
(51) Int. Cl.: H02M 5/10, H02J 7/00

(54) **Polarity inversion circuit for pulsating DC power supply**

(71) Applicant: Tai-Her, Yang, Si-Hu Town Dzan-Hwa (TW)
(72) Inventor: Tai-Her, Yang, Si-Hu Town Dzan-Hwa (TW)
(74) Representative: Pratt, David Martin

(57) **Abstract**

Circuit for the generation of electric power induced to bear opposite polarity in the pulsating DC power supply whereby electric power of opposite polarity is generated at the moment when the DC pulsating power that is being delivered is suspended, by means of an inductive element connected in series or in parallel with the load, or alternatively by means of an LC parallel circuit connected in series or in parallel with the load, and the power of opposite polarity thus generated is fed to the load.

## Description

### BACKGROUND OF THE INVENTION

### (a) Field of the Invention

Circuit for the Generation of Electric Power induced to bear opposite polarity in the Pulsating Power Supply, whereby electric power of opposite polarity is generated the moment the D. C. pulsating power that is being delivered is suspended, by means of an induction device in series or in parallel with the load, or alternatively by means of an LC parallel circuit which is in series or in parallel with the load, and the power of opposite polarity thus generated is fed to the load, highlighted in substantial cut in production cost with enhanced operational reliabilities.

### (b) Description of the Prior Art

In conventional arts, device of circuits for the generation of electric power of opposite polarity to make up sudden interruption of master D.C. pulsatingpower supply is prosecuted by cyclical exchange of polarities, and that involves much too complicated circuitry design associated with high costs.

### SUMMARY OF THE INVENTION

Circuit for the Generation of Electric Power induced to bear opposite polarity in the Pulsating Power Supply, whereby electric power of opposite polarity is generated the moment the D.C. pulsating power that is being delivered is suspended, by means of an induction device in series or in parallel with the load, or alternatively by means of an LC parallel circuit which is in series or in parallel with the load, and the power of opposite polarity thus generated is fed to the load, highlighted in substantial cut in production cost with enhanced operational reliabilities.

### BRIEF DESCRIPTION OF THE DRAWINGS

Fig. 1 is an illustration of the invention circuitry with the primary coil of the transformer in series with the D.C. pulsating power supply;
Fig. 2 is an illustration of the invention circuitry with the primary coil of the transformer in parallel with the D.C. pulsating power supply;
Fig. 3 is an illustration of the invention circuitry using in the configuration parallel inductive elements;
Fig. 4 is an illustration of the embodiment represented in Fig. 3 with the inductive elements further made in parallel with capacitive elements;
Fig. 5 illustrates the invention circuitry using in the configuration serially connected inductors; and,
Fig. 6 illustrates the invention circuitry featuring the series connection of an LC parallel loop comprising inductive and capacitive elements.

### DETAILED DESCRIPTION OF THE PREFERRED EMBODIMENTS

The invention provides a circuit for the generation of electric power induced to bear opposite polarity in the pulsating power supply, whereby electric power of opposite polarity is generated the moment the D.C. pulsating power that is being delivered is interrupted, by means of an induction device in series or in parallel with the load, or alternatively by means of an LC parallel circuit which is in series or in parallel with the load, and the power of opposite polarity thus generated is fed to the load, highlighted in substantial cut in production costs in parallel with enhanced operational reliabilities.

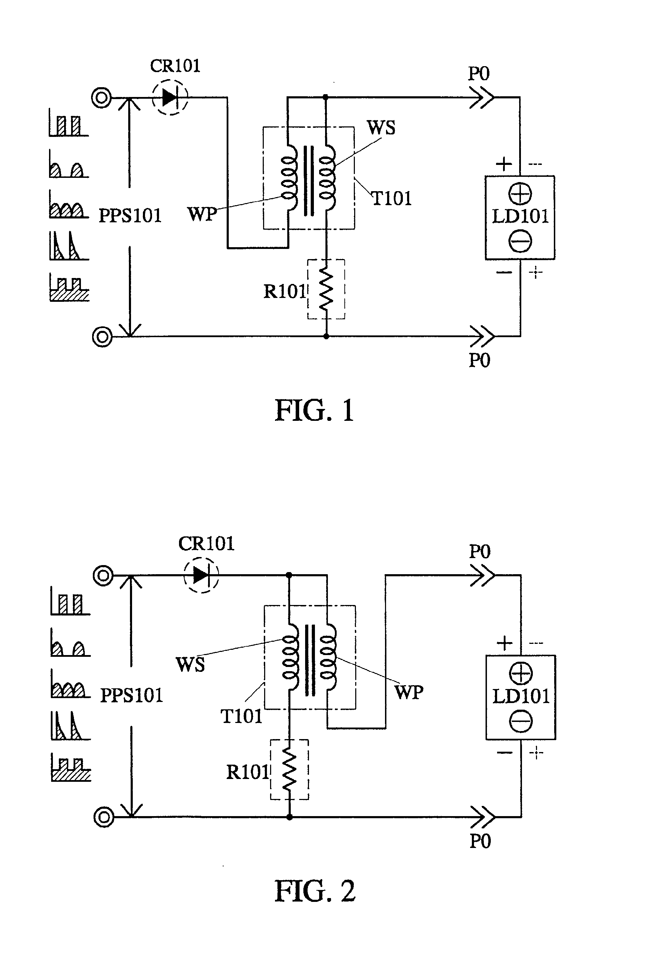

Referring to Fig. 1, an illustration of the invention whereof the primary coil of the transformer is in series with the D.C. pulsating power supply, the essential components in this execution consist of:
- D.C. pulsating power supply PPS101: yielding pulsating D.C. currents from rectification of A.C. source or D.C. source gone through linear control or switching control;
- Transformer T101: in the form of a cored or coreless transformer comprising coil windings or stacked coils which account for a primary winding WP and for a secondary winding WS respectively; with the primary winding WP made in series with the power supply, and the secondary winding WS made optionally in series with a Current Limiting Resistor R101, for paralleling across both terminals of the power supply having been made in series with a primary winding WP, the power supply being of a pulsating D.C. mode PPS101; or as pursuant to a variant execution illustrated in Fig. 2, whereof the secondary coil WS of the transformer is firstly made in parallel with the pulsating D.C. power supply PPS101, followed by allowing for serial connection of a primary coil WP, bound for the load; it is to be noted that the polarity correlation between the primary coil WP and the secondary coil WS of said transformer T101 is such that a reduction or cutoff of the causal D.C. power will bring about power of the opposite polarity on the load side;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.

The following is a description of the operation rationale of the circuits represented in both Fig. 1 and Fig. 2.

When power is being delivered way from the power supply PPS101, which is a D.C. power supply, to the load and to the primary winding WP of the transformer T101 for excitation to a steadily resistive state at the same time, both the secondary winding WS of the transformer T101 and the optionally provided current limiting resistor R101 will be induced with normal, magnetizing currents;

Once power due to the pulsating D.C. power supply turns down or gets cut off, power of the opposite polarity will be generated in the secondary winding WS of the transformer T101, to be delivered eventually to the load.

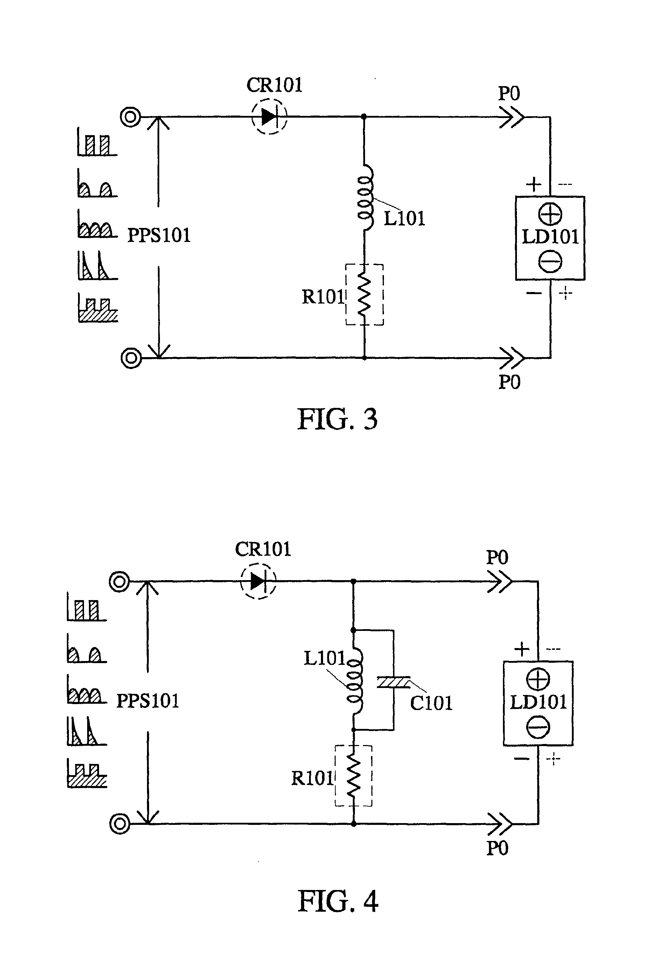

In the illustration of the invention executed in a parallel inductance circuit represented in Fig. 3, the main components include:
- Pulsating D.C. power supply PPS101: generated in a controlled state by linear or switching elements, from rectified A.C. or D.C. power supply;
- Inductance L101: in the form of cored or coreless inductors wound in coil or stacked to formation, for parallel across both terminals of the power supply, to be optionally in series with a current limiting resistor R101;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.

The operation rationale of the circuit illustrated in Fig. 3 is described below:

When power due to the pulsating D.C. power supply PPS101 is available for output, it will go straight as input to the load as well as exciting the inductor L101 till the latter is driven to a steadily resistive state; meantime generate normal, magnetizing current passing optionally the current limiting resistor R101;

Once the pulsating D.C. power supply voltage turns down orbecomes cut off, power of the oppositepolaritywillbe induced in the inductor L101, and that delivered to the load LD101.

The circuit represented in Fig. 4 is an adaptation of the circuit shown in Fig. 3 by the incorporation of a parallel capacitor to the existent inductor, structurally comprising:
- Pulsating D.C. Power Supply PPS101: generated in a controlled state by linear or switching elements from rectified A.C. or D.C. power source;
- Inductance L101: in the form of cored or coreless inductors wound in coil or stacked to formation, for parallel across both terminals of the power supply, to be optionally in series with a current limiting resistor R101;
- Capacitor C101: in parallel with the inductor L101 to interact with the inductor L101 and to respond resistively in accord with the frequency of the pulsating D.C. power supply;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.
- What follows is a description of the operation rationale of the circuit illustrated in Fig. 4;

When the power supply PPS101 is available for output, D.C. current will be delivered straight to the load and to excite the LC parallel loop comprising inductor L101 and capacitor C101 until it turns steadily resistive, and that run through with normal magnetizing current, as does an optionally provided current limiting resistor R101;

Once the incoming pulsating D.C. power supply turns down or becomes cut off, power of the opposite polarity will be generated in the LC parallel loop which consists of inductor L101 and capacitor C101 for output to the load LD101.

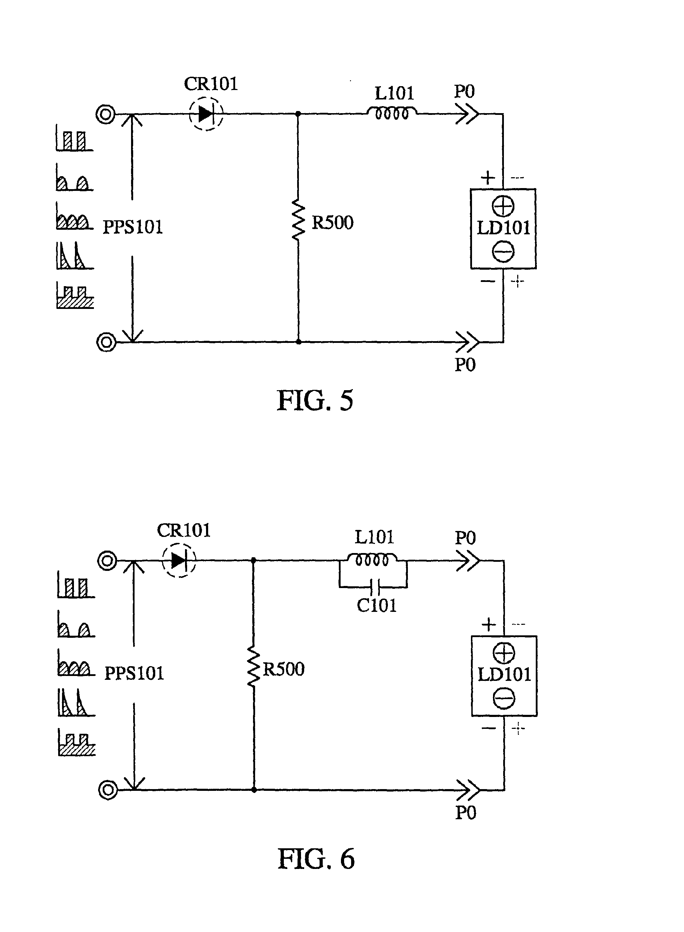

In the circuit comprising a serially connected inductor that is shown in Fig. 5, the essential components are described below:
- Pulsating D.C. power supply PPS101: generated in a controlled state by linear or switching elements, from rectified A. C. or from D.C. power supply;
- Inductor L101: in the form of cored or coreless inductors wound in coil or stacked to formation, for serial connection way between the output terminal of the power supply and the load LD101;
- Backflow Resistor R500: composed of resistive elements, paralleled across the positive terminal of the pulsating D.C. power supply PPS101 which is in connection with the inductor L101, and the negative terminal of the same pulsating D.C. power supply PPS101, to allow for passage of the power of opposite polarity;
- Blocking Diode CR101: being solid state diode in forward series with the input port of the power supply to prevent power of the opposite polarity once generated from running back to the power supply, being optional in the configuration for execution;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuit on the power supply side, and the other terminal for coupling purpose going to the load side.

What follows next is a description of the circuit represented in Fig. 5;

When there is power available for output from the power supply PPS101, D.C. current will pass to the load by way of the inductor L101 in serial connection;

Should power supply PPS101 voltage turn down or turn off, power of the opposite polarity will be produced about the inductor L101 and delivered eventually to the load via backflow resistor R500.

In the circuit represented in Fig. 6, an LC circuit in parallel comprising inductive and capacitive elements in series with the invention configuration, the essential components employed include:
- Pulsating D.C. power supply PPS101: generated in a controlled state by linear or switching elements from rectified A.C. or from D.C. source;
- Inductor L101: in the form of cored or coreless inductors wound in coil or stacked to formation, for serial connection way between the output terminal of the power supply and the load LD101;
- Capacitor C101: in parallel with the inductor L101 to interact with the inductor L101 and to respond resistively in accord with the frequency of the pulsating D.C. Power Supply;
- Backflow Resistor R500: composed of resistive elements, paralleled across the positive terminal of the pulsating D.C. power supply PPS101 which is in connection with the inductor L101, and the negative terminal of the same pulsating D.C. power supply PPS101, to allow for passage of the power of opposite polarity;
- Blocking Diode CR101: being solid state diode in forward series with the input port of the power supply to prevent power of the opposite polarity once generated from running back to the power supply, being optional in the configuration for execution;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power source;
- Conduction Contacts or Plug/Socket Assembly P0: being as such composed from electromechanical components, and being optional, with one terminal connected to the charging power supply and relevant circuit on the power supply side, and the other terminal for coupling purpose going to the load side.

What follows next is a description of the operation rationale of the circuit illustrated in Fig. 6;

When there is power available for output from the power supply PPS101, D.C. current will run to the load by way of the inductor L101 that is in parallel with the capacitor C101;

Once the power supply PPS101 voltage turns down or becomes cut off, power of the opposite polarity that is developed in the inductor L101 that is in parallel with the capacitor C101 will be delivered to the Load by way of Backflow Resistor R500.

In summation, the invention Circuit for the Generation of Electric Power Induced to Bear Opposite Polarity in the Pulsating D.C. Power Supply features simplicity in structure, low costs, novelty in design, precisely defined advantages, and for all these reasons is submitted to your highly esteemed authority for evaluation as to its patentability.

## Claims

1. Circuit for the generation of Electric Power induced to bear opposite polarity in the Pulsating D.C. Power Supply, whereby electric power of opposite polarity is generated the moment the D.C. pulsating power that is being delivered is suspended, by means of an induction device in series or in parallel with the load, or alternatively by means of an LC parallel circuit which is in series or in parallel with the load, and the power of opposite polarity thus generated is fed to the load.

2. Circuit for the generation of Electric Power induced to bear opposite polarity in the Pulsating D.C. Power Supply according to claim 1, further featuring a sub-circuit by having the primary winding of the transformer in series with the pulsating D.C. power supply, and comprising structurally essentially:
- D.C. pulsating power supply PPS101: yielding pulsating D.C. currents from rectification of A.C. source or D.C. source gone through linear control or switching control;
- Transformer T101: in the form of a cored or coreless transformer comprising coil windings or stacked coils which account for a primary winding WP and for a secondary winding WS respectively; with the primary winding WP made in series with the power supply, and the secondary winding WS made optionally in series with a Current Limiting Resistor R101, for paralleling across both terminals of the power supply having been made in series with a primary winding WP, the power supply being of a pulsating D.C. mode PPS101;or the secondary coil WS of the transformer is firstly made in parallel with the pulsating D.C. power supply PPS101, followed by allowing for serial connection of a primary coil WP, bound for the load; it is to be noted that the polarity correlation between the primary coil WP and the secondary coil WS of said transformer T101 is such that a reduction or cutoff of the causal D.C. power will bring about power of the opposite polarity on the load side;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.

3. Circuit for the Generation of Electric Power induced to bear opposite polarity in the Pulsating D.C. power supply according to claim 1, further comprising a sub-circuit by paralleling an inductor therewith, and comprising essentially:
- Pulsating D.C. power supply PPS101: generated in a controlled state by linear or switching elements, from rectified A.C. or D.C. power supply;
- Inductance L101: in the form of cored or coreless inductors wound in coil or stacked to formation, for parallel across both terminals of the power supply, to be optionally in series with a current limiting resistor R101;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.

4. Circuit for the Generation of Electric Power induced to bear opposite polarity in the Pulsating D.C. power supply according to claim 3, whereof the inductor further forms a sub-circuit by paralleling a capacitor, and comprising essentially:
- Pulsating D.C. Power Supply PPS101: generated in a controlled state by linear or switching elements from rectified A.C. or D.C. power source;
- Inductance L101: in the form of cored or coreless inductors wound in coil or stacked to formation, for parallel across both terminals of the power supply, to be optionally in series with a current limiting resistor R101;
- Capacitor C101: in parallel with the inductor L101 to interact with the inductor L101 and to respond resistively in accord with the frequency of the pulsating D.C. power supply;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuits on the power supply side, and the other terminal for coupling purpose going to the load side;
- Blocking Diode CR101: being structurally solid state diode in forward series with the input port of the power supply to prevent power of the opposite polarity once generated from running back to the power supply, being optional in the configuration for execution.

5. Circuit for the Generation of Electric Power induced to bear opposite polarity in the Pulsating D.C. power supply according to claim 1, incorporating further a sub-circuit formed by serial connection of inductors, and comprising essentially:
- Pulsating D.C. power supply PPS101: generated in a controlled state by linear or switching elements, from rectified A.C. or from D.C. power supply;
- Inductor L101: in the form of cored or coreless inductors wound in coil or stacked to formation, for serial connection way between the output terminal of the power supply and the load LD101;
- Backflow Resistor R500: composed of resistive elements, paralleled across the positive terminal of the pulsating D.C. power supply PPS101 which is in connection with the inductor L101, and the negative terminal of the same pulsating D.C. power supply PPS101, to allow for passage of the power of opposite polarity;
- Blocking Diode CR101: being solid state diode in forward series with the input port of the power supply to prevent power of the opposite polarity once generated from running back to the power supply, being optional in the configuration for execution;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power supply;
- Conduction Contacts or Plug/Socket Assembly P0: being as such composed from electromechanical components, and being optional, with one terminal connected to the charging power supply and relevant circuit on the power supply side, and the other terminal for coupling purpose going to the load side.

6. Circuit for the Generation of Electric Power induced to bear opposite polarity in the Pulsating D.C. power supply according to claim 5, further incorporating an LC parallel sub-circuit which consists of inductor and capacitor, the totality being in series with the Main circuitry, and comprising essentially:
- Pulsating D.C. power supply PPS101: generated in a controlled state by linear or switching elements from rectified A.C. or from D.C. source;
- Inductor L101: in the form of cored or coreless inductors wound in coil or stacked to formation, for serial connection way between the output terminal of the power supply and the load LD101;
- Capacitor C101: in parallel with the inductor L101 to interact with the inductor L101 and to respond resistively in accord with the frequency of the pulsating D.C. Power Supply;
- Backflow Resistor R500: composed of resistive elements, paralleled across the positive terminal of the pulsating D.C. power supply PPS101 which is in connection with the inductor L101, and the negative terminal of the same pulsating D.C. power supply PPS101, to allow for passage of the power of opposite polarity;
- Blocking Diode CR101: being solid state diode in forward series with the input port of the power supply to prevent power of the opposite polarity once generated from running back to the power supply, being optional in the configuration for execution;
- Load LD101: in the form of a rechargeable secondary cell or electroplating bath, or electrolytical processing electrode together with working objects, or still those necessitating the input of power of the opposite polarity in the event of power interruption or of a reduction in power supply which is necessarily pulsating D.C. power source; Conduction Contacts or Plug/Socket Assembly P0: being as such composed from electromechanical components, and being optional, with one terminal connected to the charging power supply and relevant circuit on the power supply side, and the other terminal for coupling purpose going to the load side.

7. A circuit for the generation of electric power induced to bear opposite polarity in a pulsating D.C power supply whereby electric power of opposite polarity is generated the moment the D.C. pulsating power that is being delivered is suspended, the circuit comprising a device in series with, or parallel to, the load, whereby the power of opposite polarity thus generated is fed to the load.

8. A circuit as claimed in claim 7, wherein the device is an induction device.

9. A circuit as claimed in claim 7, wherein the device is an LC parallel circuit.
